(19) Europäisches Patentamt / European Patent Office / Office européen des brevets

(11) **EP 3 803 440 B1**

(12) **EUROPÄISCHE PATENTSCHRIFT**

(45) Veröffentlichungstag und Bekanntmachung des Hinweises auf die Patenterteilung:
**26.07.2023   Patentblatt 2023/30**

(21) Anmeldenummer: **19726945.9**

(22) Anmeldetag: **22.05.2019**

(51) Internationale Patentklassifikation (IPC):
**G01S 5/02** *(2010.01)*      **G01S 5/14** *(2006.01)*
**B60D 1/00** *(2006.01)*      **B60W 40/00** *(2006.01)*
**G01S 5/08** *(2006.01)*      **G01S 5/12** *(2006.01)*
**B60D 1/62** *(2006.01)*      **B60W 40/10** *(2012.01)*
**G01S 13/87** *(2006.01)*     **G01S 13/931** *(2020.01)*

(52) Gemeinsame Patentklassifikation (CPC):
**G01S 5/0284; B60D 1/62; B60W 40/10; G01S 5/14; G01S 13/87; G01S 13/931;** B60W 2420/00; B60W 2420/10; B60W 2520/00; B60W 2520/22; G01S 5/0247; G01S 2013/93274; G01S 2205/01

(86) Internationale Anmeldenummer:
**PCT/EP2019/063204**

(87) Internationale Veröffentlichungsnummer:
**WO 2019/228885 (05.12.2019 Gazette 2019/49)**

(54) **VERFAHREN UND VORRICHTUNG ZUR BESTIMMUNG VON FAHRZEUGPARAMETERN**

METHOD AND DEVICE FOR DETERMINING VEHICLE PARAMETERS

PROCÉDÉ ET DISPOSITIF DE DÉTERMINATION DE PARAMÈTRES DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.05.2018   DE 102018208526**

(43) Veröffentlichungstag der Anmeldung:
**14.04.2021   Patentblatt 2021/15**

(73) Patentinhaber: **Continental Automotive Technologies GmbH**
**30165 Hannover (DE)**

(72) Erfinder:
• WEINLICH, Andreas
  **65824 Schwalbach a. Ts. (DE)**
• SMITS, Thomas
  **65824 Schwalbach a. Ts. (DE)**
• KABUTZ, Marten
  **65824 Schwalbach a. Ts. (DE)**
• SCHMALRIEDE, Tobias
  **65824 Schwalbach a. Ts. (DE)**

(74) Vertreter: **Continental Corporation**
**c/o Continental Teves AG & Co. OHG Intellectual Property Guerickestraße 7 60488 Frankfurt a. Main (DE)**

(56) Entgegenhaltungen:
DE-A1-102014 204 924     DE-A1-102014 212 821
US-A1- 2013 307 723      US-A1- 2018 059 209
US-A1- 2018 097 572

EP 3 803 440 B1

**Beschreibung**

Die Erfindung betrifft ein Verfahren und eine Vorrichtung zur Bestimmung von Fahrzeugparametern, insbesondere zur Bestimmung von verschiedenen Parametern in Bezug auf einen Fahrzeuganhänger.

Viele Fahrzeuge heutzutage weisen kamerabasierte Systeme auf, wie beispielsweise Außenspiegelersatzsysteme, Rückfahrkameras und Surround View Kameras. Derartige Systeme spielen insbesondere bei Fahrzeugen mit Anhänger, wie beispielsweise Lastkraftwagen oder landwirtschaftlichen Fahrzeugen, eine große Rolle in Bezug auf Sicherheit. Bei Außenspiegelersatzsystemen, welche einen dynamischen Bildausschnitt anzeigen, sollte dem Fahrer zu jedem Zeitpunkt während der Fahrt der richtige Bildausschnitt, also der Bereich, welcher in der aktuellen Situation von größtem Interesse ist, angezeigt werden. Es soll dadurch sichergestellt sein, dass dem Fahrer zu jedem Zeitpunkt kritische Bereiche angezeigt werden und er Hindernisse und potentielle Gefahrenquellen sicher erkennen kann.

Um jederzeit den angezeigten Bildausschnitt an die jeweilige Fahrsituation anpassen zu können, müssen dem System verschiedene Fahrzeugdaten bekannt sein. Dies sind beispielsweise die Länge des Fahrzeugs und eines vom Fahrzeug gezogenen Anhängers oder der momentane Knickwinkel zwischen dem Zugfahrzeug und dem Anhänger.

Die Druckschrift DE 10 2014 204924 A1 offenbart ein System zum Bestimmen eines Kupplungswinkels zwischen einem Fahrzeug und einem an dasselbe angekuppelten Anhänger. Das System hat einen an dem Fahrzeug in einer vorbestimmten Entfernung von einer Anhängeranbringung angeordneten Drahtlos-Empfänger, einen an einem Ende des Anhängers gegenüber der Anhängeranbringung angeordneten Drahtlos-Sender und ein Steuergerät zum Überwachen von Leistungsrückläufen eines von dem Sender an den Empfänger gesendeten Signals und zum Bestimmen einer Entfernung zwischen dem Sender und dem Empfänger in Abhängigkeit von einer Streckendämpfungsausbreitung des gesendeten Signals. Der Kupplungswinkel wird unter Verwendung der bestimmten Entfernung, der vorbestimmten Entfernung und einer Anhängerlänge bestimmt.

Die Druckschrift DE 10 2014 212821 A1 offenbart eine Schwenkwinkelerfassungsvorrichtung zur Erfassung eines Schwenkwinkels zwischen einem Fahrzeug und einer an das Fahrzeug angekuppelten Anhängervorrichtung. Dabei ist ein Sender vorgesehen, der zur Erzeugung eines elektromagnetischen Feldes ausgeführt ist, sowie ein Empfänger, der zur Erkennung einer Feldstärke des elektromagnetischen Feldes ausgeführt ist, wobei der Sender und Empfänger derart zueinander auf Fahrzeug und Anhängervorrichtung angeordnet sind, dass eine Änderung des Schwenkwinkels eine hiervon abhängige Änderung der vom Empfänger erkannten Feldstärke bewirkt. Zudem ist eine Auswerteinrichtung zur Ermittlung des Schwenkwinkels anhand der erkannten Feldstärke vorgesehen.

Die Druckschrift US 2013/307723 A1 offenbart ein Gerät, welches von verschiedenen Standorten aus Nachrichten an einen oder mehrere APs (Zugangspunkte) senden und empfangen kann, um die Entfernung zwischen dem Gerät und dem AP zu bestimmen. Das Gerät kann zusätzlich seine eigene Verschiebung verfolgen, um den Standort des einen oder der mehreren APs zu bestimmen.

Die Druckschrift US 2018/059209 A1 offenbart ein System mit einer Vielzahl von im Fahrzeug eingesetzten drahtlosen Sendern und einen Prozessor. Der Prozessor ist so konfiguriert, dass er von einem Mobilgerät Signalstärken von Signalen von den drahtlosen Sendern empfängt, wie sie von dem Mobilgerät erfasst werden. Der Prozessor ist ferner dazu konfiguriert, einen Standort des Mobilgeräts in einem Fahrzeug basierend auf der Entfernung vom Mobilgerät zu jedem der jeweiligen Sender, wie durch die empfangenen Signalstärken angezeigt, zu bestimmen.

Die Druckschrift US 2018/097572 A1 offenbart eine Computervorrichtung, welche erfasste Dateninformationen empfangen kann, die in einer Übertragung von einem ersten Sensor gesendet werden, wobei die erfassten Dateninformationen eine Sensorkennung und erfasste Daten eines ersten Sensors umfassen. Die Computervorrichtung kann den erfassten Dateninformationen einen ersten Zeitstempel zuordnen. Ferner kann die Computervorrichtung von anderen Sensoren Funksignalstärkeinformationen empfangen, einschließlich Signalstärkedaten bezüglich der Übertragung und eines zweiten Zeitstempels entsprechend der Detektion der Übertragung. Die Computervorrichtung kann einen Standort des ersten Sensors basierend auf den von den anderen Sensoren empfangenen Signalstärkedaten bestimmen. Außerdem kann die Computervorrichtung den Standort mit der Sensorkennung des ersten Sensors basierend auf dem Vergleichen des ersten Zeitstempels mit dem zweiten Zeitstempel assoziieren.

Aufgabe der Erfindung ist es, ein verbessertes Verfahren und eine verbesserte Vorrichtung zur Bestimmung von Fahrzeugparametern bereitzustellen.

Diese Aufgabe wird durch ein Verfahren gemäß Anspruch 1 und eine Vorrichtung gemäß Anspruch 12 gelöst. Ausgestaltungen und Weiterbildungen des Erfindungsgedankens sind Gegenstand von abhängigen Ansprüchen.

Es wird ein die Merkmale des Anspruchs 1 aufweisendes Verfahren zum Bestimmen von Parametern in Bezug auf einen Anhänger beschrieben. Das Verfahren weist das Bestimmen des Abstands zwischen einer ersten Sende-Empfangseinheit und einer zweiten Sende-Empfangseinheit auf, wobei die erste Sende- Empfangseinheit an einem Fahrzeug und die zweite Sende-Empfangseinheit an einem mit dem Fahrzeug verbundenen Anhänger angebracht ist. Das Verfahren weist weiterhin das Bestimmen wenigstens eines Parameters in Bezug auf den Anhänger, unter Einbeziehung des Abstands zwischen der ersten Sende-Empfangseinheit und der zweiten Sende-Empfangseinheit auf.

Dadurch können verschiedenste Parameter in Bezug auf den Anhänger auf einfache Art und Weise bestimmt werden.

Das Bestimmen des Abstands zwischen der ersten Sende-Empfangseinheit und der zweiten Sende-Empfangseinheit kann das Aussenden wenigstens eines Signals zwischen der ersten Sende-Empfangseinheit und der zweiten Sende-Empfangseinheit aufweisen. Häufig sind für die verschiedensten Anwendungen bereits Sende-Empfangseinheiten am Fahrzeug und am Anhänger angeordnet, so dass für die Bestimmung des Abstands zwischen den Sende-Empfangseinheiten und der nachfolgenden Bestimmung der Parameter Einheiten verwendet werden können, welche bereits vorhanden sind. Beispielsweise finden sich Sende-Empfangseinheiten bereits in verschiedenen Funkkamerasystemen, welche bereits für andere Anwendungen am Anhänger angeordnet sind. Das heißt, das Verfahren kann kostengünstig implementiert werden, da möglicherweise keine neue Hardware erforderlich ist. Zudem ist die Bestimmung der Parameter auf diese Weise einfacher zu implementieren als mit anderen Verfahren.

Das Bestimmen des Abstands zwischen der ersten Sende-Empfangseinheit und der zweiten Sende-Empfangseinheit kann weiterhin das Bestimmen der Empfangsfeldstärke des zwischen der ersten Sende-Empfangseinheit und der zweiten Sende-Empfangseinheit gesendeten Signals aufweisen.

Alternativ kann das Bestimmen des Abstands zwischen der ersten Sende-Empfangseinheit und der zweiten Sende-Empfangseinheit das Bestimmen der Laufzeit des zwischen der ersten Sende-Empfangseinheit und der zweiten Sende-Empfangseinheit gesendeten Signals aufweisen.

Dadurch kann der Abstand auf einfache Art und Weise mit hinreichender Genauigkeit bestimmt werden.

Das Aussenden des wenigstens einen Signals zwischen der ersten Sende-Empfangseinheit und der zweiten Sende-Empfangseinheit kann das Aufmodulieren des wenigstens einen Signals auf wenigstens zwei verschiedene Trägerfrequenzen aufweisen. Alternativ dazu können auch wenigstens zwei Signale mit jeweils unterschiedlicher Trägerfrequenz ausgesendet werden.

Das Bestimmen des wenigstens einen Parameters in Bezug auf den Anhänger weist dabei das Bestimmen der Länge des Anhängers anhand des bestimmten Abstands, der Entfernung zwischen der ersten Sende-Empfangseinheit und einer Vorderkante des Anhängers, und einem horizontalen Versatz zwischen der zweiten Sende-Empfangseinheit und der ersten Sende-Empfangseinheit auf.

Die Kenntnis über die Länge eines Anhängers ist für die verschiedensten Fahrerassistenzsysteme erforderlich.

Das Bestimmen der Länge des Anhängers kann dabei während einer Geradeausfahrt des Fahrzeugs erfolgen.

Bei einer Geradeausfahrt können einfache geometrische Grundsätze zur Bestimmung der Länge des Anhängers angewendet werden.

Das Bestimmen des wenigstens einen Parameters in Bezug auf den Anhänger kann auch das Bestimmen eines Knickwinkels zwischen dem Fahrzeug und dem Anhänger anhand des bestimmten Abstands, dem Abstand zwischen der ersten Sende-Empfangseinheit und einem Drehpunkt des Anhängers, und der Länge des Anhängers aufweisen.

Die Kenntnis über den Knickwinkel zwischen einem Anhänger und dem Fahrzeug ist für die verschiedensten Fahrerassistenzsysteme erforderlich.

Das Bestimmen des Knickwinkels kann dabei während einer Kurvenfahrt des Fahrzeugs erfolgen.

Bei Geradeausfahrt ist der Knickwinkel zwischen Fahrzeug und Anhänger bekannt. Eine Ermittlung ist daher grundsätzlich nur bei Kurvenfahrt erforderlich.

Das Bestimmen des wenigstens einen Parameters in Bezug auf den Anhänger kann weiterhin auch das Bestimmen des Abstands zwischen einer weiteren Sende-Empfangseinheit und der zweiten Sende-Empfangseinheit aufweisen, wobei die weitere Sende-Empfangseinheit an dem Fahrzeug an einer unterschiedlichen Position wie die erste Sende-Empfangseinheit angebracht ist.

Das Bestimmen des wenigstens einen Parameters in Bezug auf den Anhänger kann dabei weiterhin das Bestimmen der Position der zweiten Sende-Empfangseinheit mittels Trilaterations- oder Multilaterationsverfahren unter Berücksichtigung der Entfernungen zwischen den Sende-Empfangseinheiten am Fahrzeug und der zweiten Sende-Empfangseinheit am Anhänger aufweisen.

Kamerasysteme von Fahrerassistenzsystemen sind häufig nur temporär an einem Anhänger angebracht. Die Position der Kamerasysteme kann daher variieren. Die Kenntnis über die Position eines Kamerasystems in Bezug auf ein Fahrzeug ist jedoch für die verschiedensten Fahrerassistenzsysteme erforderlich. Das heißt, die bestimmten Parameter können anschließend beispielsweise für verschiedenste Fahrerassistenzsysteme verwendet werden.

Es wird weiterhin eine die Merkmale des Anspruchs 12 aufweisende Vorrichtung zum Bestimmen von Parametern in Bezug auf einen Anhänger beschrieben. Die Vorrichtung weist eine erste Sende-Empfangseinheit, die dazu ausgebildet ist, an einem Fahrzeug angebracht zu werden, und eine zweite Sende- Empfangseinheit auf, die dazu ausgebildet ist, an einem mit dem Fahrzeug verbundenen Anhänger angebracht zu werden. Die Vorrichtung ist dazu ausgebildet, einen Abstand zwischen der ersten Sende-Empfangseinheit und der zweiten Sende-Empfangseinheit zu bestimmen, wenn die erste Sende-Empfangseinheit an dem Fahrzeug und die zweite Sende-Empfangseinheit an dem Anhänger angebracht sind. Die Vorrichtung ist weiterhin dazu ausgebildet, wenigstens einen Parameter in Bezug auf den Anhänger zu bestimmen, unter Einbeziehung des Abstands zwischen der ersten Sende-Empfangseinheit und der zweiten Sende-Empfangseinheit.

Die Vorrichtung kann dabei weiterhin dazu ausgebildet sein, wenigstens ein Signal zwischen der ersten Sende-Empfangseinheit und der zweiten Sende-Empfangseinheit auszusenden, wenn die erste Sende-Empfangseinheit an dem Fahrzeug und die zweite Sende-Empfangseinheit an dem Anhänger angebracht sind.

Die Vorrichtung kann weiterhin dazu ausgebildet sein, die Empfangsfeldstärke des zwischen der ersten Sende-Empfangseinheit und der zweiten Sende-Empfangseinheit gesendeten Signals zu bestimmen.

Die Vorrichtung kann weiterhin dazu ausgebildet sein, die Laufzeit des zwischen der ersten Sende-Empfangs-einheit und der zweiten Sende-Empfangseinheit gesendeten Signals zu bestimmen.

Die Erfindung wird nachfolgend anhand der Figuren der Zeichnung näher erläutert, wobei gleiche oder ähnliche Elemente mit denselben Bezugszeichen versehen sind. Es zeigt:

Figur 1     in einer skizzenhaften Darstellung ein Fahrzeug mit einem Anhänger,

Figur 2     in einer Draufsicht schematisch ein Fahrzeug mit einem Anhänger bei Geradeausfahrt,

Figur 3     in einer Draufsicht schematisch ein Fahrzeug mit einem Anhänger bei Kurvenfahrt,

Figur 4     in einer skizzenhaften Darstellung verschiedene Abmessungen eines Fahrzeugs mit einem Anhänger,

Figur 5     in einer skizzenhaften Darstellung verschiedene Abmessungen eines Fahrzeugs mit einem Anhänger,

Figur 6     in einer skizzenhaften Darstellung ein Verfahren zur Bestimmung der Position einer Kamera in Bezug auf ein Fahrzeug mit Anhänger und

Figur 7     in einem Ablaufdiagramm ein Verfahren zur Bestimmung von Fahrzeugparametern.

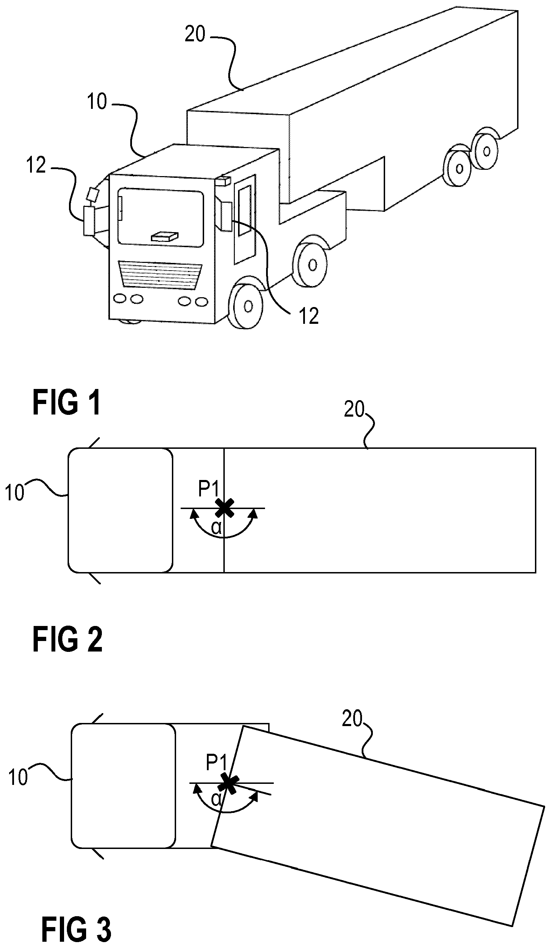

Figur 1 zeigt in einer skizzenhaften Darstellung ein Fahrzeug 10 mit einem Anhänger 20. In dem dargestellten Beispiel ist das Fahrzeug 10 ein Lastkraftwagen. Dies ist jedoch lediglich ein Beispiel. Als Zugfahrzeug kann grundsätzlich jegliches geeignete Fahrzeug (z.B. PKW) Verwendung finden. Der Anhänger 20 kann teilweise auf dem Fahrzeug 10 aufliegen (sog. Sattelanhänger oder Sattelauflieger). Der Anhänger 20 kann jedoch auch auf jegliche andere Art und Weise geeignet mit dem Fahrzeug 10 verbunden sein, beispielsweise über eine Deichsel.

Das Fahrzeug 10 weist in der Regel Außenspiegel 12 auf, um es dem Fahrer zu ermöglichen, während der Fahrt Bereiche neben und hinter dem Fahrzeug 10 und dem Anhänger 20 einzusehen. Das Sichtfeld ist bei Außenspiegeln 12 jedoch eingeschränkt. Insbesondere Bereiche (mittig) hinter dem Anhänger 20 können nur sehr eingeschränkt bzw. gar nicht eingesehen werden, da diese vom Anhänger 20 verdeckt werden.

Daher weisen viele Fahrzeuge heutzutage verschiedenste Fahrerassistenzsysteme auf, welche es dem Fahrer ermöglichen, auch solche Bereiche einzusehen, welche von dem Fahrzeug 10 und/oder von dem Anhänger 20 teilweise oder komplett verdeckt werden. Beispielsweise können verschiedene Kameraeinheiten am Fahrzeug 10 und/oder am Anhänger 20 angebracht sein, welche Bilder von der Umgebung des Fahrzeugs 10 und des Anhängers 20 aufnehmen. Diese Bilder können dem Fahrer in geeigneter Perspektive auf einem oder mehreren Displays im oder am Fahrzeug 10 dargestellt werden. Beispielsweise kann es dem Fahrer so ermöglicht werden, den so genannten toten Winkel einzusehen. Dabei können jedoch nicht nur Bereiche auf dem wenigstens einen Display dargestellt werden, die mittels herkömmlicher Spiegel nicht oder nur eingeschränkt einsehbar sind. Auch solche Bereiche, welche der Fahrer mittels herkömmlicher Seitenspiegel oder durch die Front- oder Seitenscheiben des Fahrzeugs 10 einsehen kann, können ebenfalls auf Displays dargestellt werden.

Beispielsweise sind so genannte Außenspiegelersatzsysteme, oft auch als Kamera-Monitor-Systeme bezeichnet, bekannt. Dabei werden die konventionellen Außenspiegel komplett durch Displays ersetzt. Beispielsweise können in den Seitenspiegeln außerhalb des Fahrzeugs Displays angeordnet sein, welche das Spiegelglas ersetzen. Dem Fahrer werden dann in den Seitenspiegeln Kameraaufnahmen dargestellt, welche von entsprechenden Kameraeinheiten aufgenommen werden. Es ist jedoch auch möglich, dass die Seitenspiegel komplett entfallen und durch Displays im Inneren des Fahrzeugs ersetzt werden. Dadurch kann einerseits die Sicherheit erhöht werden, da Objekte und Hindernisse vom Fahrer zuverlässiger erkannt werden können. Andererseits können beispielsweise durch das Anbringen von Displays im Inneren des Fahrzeugs und Verzicht auf Außenspiegel die Kraftstoffemissionen und der Geräuschpegel beim Fahren reduziert werden, da die Aerodynamik des Fahrzeugs verbessert wird.

Um die Sicherheit tatsächlich erhöhen zu können, ist es dabei jedoch erforderlich, dass auf den entsprechenden Displays geeignete Bildausschnitte angezeigt werden. Je nach Fahrsituation können unterschiedliche Bereiche in Bezug auf das Fahrzeug 10 und den Anhänger 20 für den Fahrer relevant sein. Die relevanten Bildbereiche sollten dabei auch situationsabhängig geeignet skaliert werden, da der Fahrer bei den Ersatzsystemen sein Sichtfeld nicht wie bei herkömmlichen Spiegeln durch geeignete Kopfbewegungen verändern kann. Für die Skalierung und die geeignete Wahl des Bildausschnittes ist es oft erforderlich, dass verschiedene Fahrzeugparameter bekannt sind. Beispielsweise kann es erforderlich sein, dass die Länge des Anhängers 20 bekannt ist, um zuverlässig Bilder im Bereich der Hinterkante des Anhängers 20 darstellen zu können. Ebenfalls ist es häufig auch erforderlich, den Knickwinkel $\alpha$ zwischen Fahrzeug 10 und Anhänger 20 zu kennen. Der Knickwinkel $\alpha$ beträgt bei Geradeausfahrt beispielsweise im Wesentlichen 180° (vgl. z.B. Figur 2) und kann bei Kurvenfahrten Werte <180° annehmen (vgl. z.B. Figur 3). In den Figuren 2 und 3 ist auch der Drehpunkt P1 dargestellt, um welchen sich der Anhänger 20 bei Kurvenfahrten drehen kann.

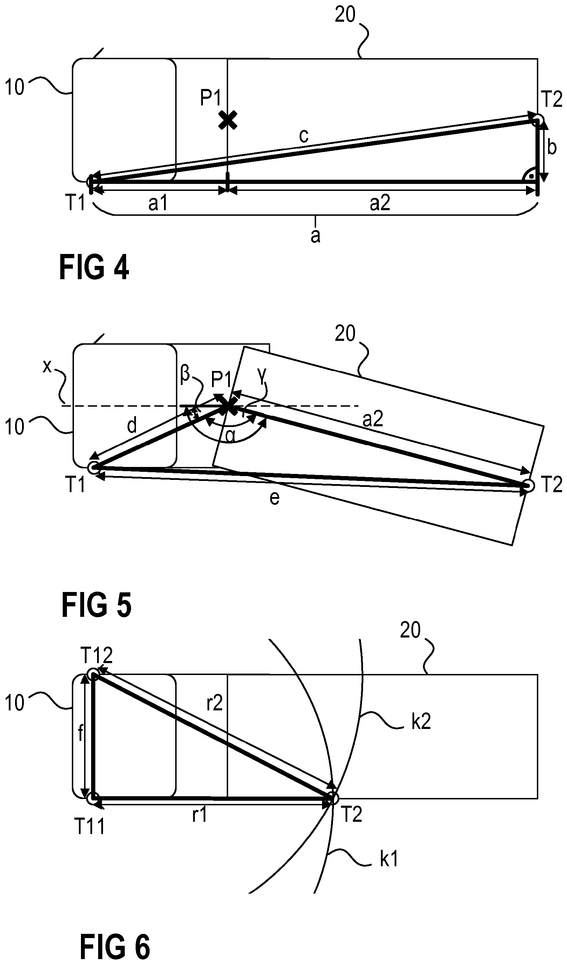

Die auf dem wenigstens einen Display dargestellten Bilder werden durch eine oder mehrere Kameras aufgenommen, die am Fahrzeug 10 und/oder am Anhänger 20 angeordnet sein können. Es sind dabei Systeme bekannt, bei welchen die Kameras am Anhänger 20 nicht dauerhaft, sondern nur temporär befestigt sind. Manche Kamerasysteme können nur bei Bedarf am Anhänger 20 angebracht werden, z.B. mittels Saugnäpfen, mittels Magneten o.ä. In solchen Fällen kann es sein, dass die genaue Anbringposition der Kameras nicht bekannt ist. Um geeignete Bereiche in entsprechender Skalierung auf dem wenigstens einen Display darstellen zu können, kann es jedoch erforderlich sein, dass die Anbringposition der Kameras bekannt ist. Ein Beispiel für ein Verfahren zum Bestimmen der Anbringposition einer Kamera wird weiter unten in Bezug auf Figur 6 beschrieben.

In Figur 4 ist beispielhaft dargestellt, wie die Länge a2 eines Anhängers 20 bestimmt werden kann. Verschiedene Parameter werden dabei als bekannt angenommen. Beispielsweise ist die Länge a1 des Fahrzeugs 10 in der Regel bekannt. Da ein Fahrerassistenzsystem in einem Fahrzeug 10 meist fest installiert ist und sich die Parameter des Fahrzeugs 10 (z.B. Länge und Breite) nicht ändern, ist es ausreichend, wenn diese Parameter einmalig in das System eingegeben werden. Für die spätere Bestimmung weiterer Parameter können diese dann jederzeit Verwendung finden. Während ein Fahrerassistenzsystem einem Fahrzeug 10 meist fest zugeordnet werden kann, können von dem Fahrzeug 10 wechselnde Anhänger 20 gezogen werden. Daher können die Abmessungen eines mit dem Fahrzeug 10 verbundenen Anhängers 20 nicht fest im System hinterlegt werden. Verschiedene Anhänger 20 können beispielsweise unterschiedlich lang sein. Die Breite eines von einem Fahrzeug 10 gezogenen Anhängers 20 entspricht hingegen meist der Breite des Fahrzeugs 10. Somit kann die Breite des Anhängers 20 als bekannt angenommen werden, da die Breite des Fahrzeugs 10 in der Regel bekannt ist.

Zur Bestimmung der Länge a2 des Anhängers 20 wird eine erste Sende-Empfangseinheit T1 am Fahrzeug 10 angebracht. Die erste Sende-Empfangseinheit T1 kann beispielsweise mit einer Kameraeinheit verbunden sein, welche zum Aufnehmen geeigneter Bilder am Fahrzeug 10 angeordnet ist. Viele Kamerasysteme übertragen die Bilddaten drahtlos an eine (nicht dargestellte) Auswerteeinheit im Fahrzeug 10. Somit sind viele Kameraeinheiten bereits standardmäßig mit entsprechenden Sende-Empfangseinheiten ausgestattet, und es können bereits vorhandene Einheiten Verwendung finden. Am Anhänger 20 kann eine zweite Sende-Empfangseinheit T2 angeordnet sein. Die zweite Sende-Empfangseinheit T2 kann beispielsweise an der rechten oder linken Hinterkante des Anhängers 20 angebracht sein. Dadurch kann eine hohe Qualität der Funkverbindung zu der ersten Sende-Empfangseinheit T1 erreicht werden, da die gesendeten Signale nicht oder nur geringfügig durch den Anhänger 20 abgeschattet werden. Wird die zweite Sende-Empfangs-einheit T2 beispielsweise an anderen Positionen am Anhänger 20 angeordnet, können Teile des Anhängers 20 im direkten Pfad zwischen der ersten und der zweiten Sende-Empfangseinheit T1, T2 liegen. Dadurch kann, z.B. durch Abschattungseffekte, die Funkverbindung teilweise erheblich gestört werden. Die zweite Sende-Empfangseinheit T2 kann beispielsweise ebenfalls mit einer am Anhänger 20 angebrachten Kameraeinheit verbunden sein. Auch Kameraeinheiten, die an einem Anhänger 20 (temporär oder dauerhaft) angeordnet sind, übertragen Bilddaten häufig drahtlos an eine (nicht dargestellte) Auswerteeinheit im Fahrzeug 10. Somit können auch für die zweite Sende-Empfangseinheit T2 bereits vorhandene Komponenten Verwendung finden.

Zwischen der ersten Sende-Empfangseinheit T1 und der zweiten Sende-Empfangseinheit T2 können Signale gesendet werden. Anhand dieser Signale kann der Abstand c zwischen der ersten Sende-Empfangseinheit T1 und der zweiten Sende-Empfangs-einheit T2 bestimmt werden. Beispielsweise kann die Empfangsfeldstärke RSSI eines oder mehrerer zwischen der ersten Sende-Empfangseinheit T1 und der zweiten Sende-Empfangs-einheit T2 gesendeter Signale bestimmt werden. Die gemessene Empfangsfeldstärke RSSI ist ein Hinweis darauf, in welchem Abstand zueinander die Sende-Empfangseinheiten T1, T2 angeordnet sind.

Die zwischen den Sende-Empfangseinheiten T1, T2 gesendeten Signale können beispielsweise LF-, HF-, UWB (Ultra-wideband), Bluetooth oder BLE-Signale (Bluetooth Low Energy-Signale) sein. HF-Signale, LF-Signale und Bluetooth bzw. Bluetooth Low Energy-Signale sind jedoch lediglich Beispiele. Es können verschiedene andere Kommunikationsverbindungen Verwendung finden um die Bestimmung der Anhängerlänge zu realisieren.

Anstatt die Empfangsfeldstärke RSSI solcher Signale zu bestimmen, kann der Abstand c zwischen den Sende-Empfangs-einheiten T1, T2 jedoch beispielsweise auch anhand einer Laufzeitmessung der ausgesendeten Signale bestimmt werden. Beispielsweise können von der ersten Sende-Empfangs-einheit T1 Signale ausgesendet werden. Der Zeitpunkt, zu welchem jedes der Signale ausgesendet wird, ist dabei bekannt. Die zweite Sende-Empfangseinheit T2 empfängt die Signale und sendet entsprechende Antwortsignale zurück an die erste Sende-Empfangseinheit T1. Die Ausbreitungsgeschwindigkeit der ausgesendeten Signale ist bekannt (Lichtgeschwindigkeit). Zudem ist auch die Verarbeitungszeit in der zweiten Sende-Empfangs-einheit T2 bekannt, welche benötigt wird, um die von der ersten Sende-Empfangseinheit T1 empfangenen Signale zu empfangen, zu verarbeiten, und entsprechende Antwortsignale zurück zu senden. Aus dem Empfangszeitpunkt der Antwortsignale in der ersten Sende-Empfangseinheit T1 sowie aus allen anderen bekannten Parametern kann somit die von den Signalen zurückgelegte Strecke bestimmt werden, welche dem Abstand c zwischen der ersten Sende- Empfangseinheit T1 und der zweiten Sende-Empfangseinheit T2 entspricht. Dabei ist es möglich, sowohl die Laufzeiten der Signale von der ersten zu der zweiten Sende-Empfangseinheit T1, T2 als auch die Laufzeiten der Signale von der zweiten zu der ersten Sende-Empfangseinheit T2, T1 zu bestimmen (auch bekannt als "Round Trip Time of Flight", RTOF). Es ist jedoch auch möglich, nur die Laufzeit der Signale in einer der beiden Richtungen zu bestimmen (auch bekannt als "Time of Arrival", TOA).

Ist der Abstand c zwischen der ersten und der zweiten Sende-Empfangseinheit T1, T2 bekannt, wird zur Bestimmung der Länge a2 des Anhängers 20 weiterhin davon ausgegangen, dass die Position der zweiten Sende-Empfangseinheit T2 bekannt ist. Beispielsweise kann es für die Bestimmung der Anhängerlänge a2 erforderlich sein, dass die zweite Sende-Empfangseinheit T2 an der Hinterkante des Anhängers 20 in einem vorgegebenen Abstand b zur seitlichen Kante des Anhängers 20 angeordnet ist. Die Position der ersten Sende-Empfangseinheit T1 ist ebenfalls bekannt. Beispielsweise kann die erste Sende-Empfangseinheit T1 seitlich am Fahrzeug 10 angeordnet sein, wie beispielhaft in Figur 4 dargestellt. Der Abstand a1 zwischen der ersten Sende-Empfangseinheit T1 und der Vorderkante des Anhängers 20 ist dabei ebenfalls bekannt. Die Bestimmung der Anhängerlänge a2 erfolgt dabei beispielsweise, wie in Figur 4 dargestellt, bei Geradeausfahrt ($\alpha$ = 180°).

Aus den verschiedenen bekannten und unbekannten Abmessungen kann, wie in Figur 4 dargestellt, ein rechtwinkliges Dreieck gebildet werden. Über die Gleichung $a^2 + b^2 = c^2$ (Satz des Pythagoras) kann dann leicht die Anhängerlänge a2 berechnet werden, wobei gilt, a = a1 + a2.

Bei der oben beispielhaft dargestellten Bestimmung der Anhängerlänge a2 wird davon ausgegangen, dass die erste Sende-Empfangseinheit T1 und die zweite Sende-Empfangseinheit T2 in der selben Höhe angeordnet sind, z.B. 2 m über dem Boden, 3 m über dem Boden oder 4 m über dem Boden. Grundsätzlich kann die erste Sende-Empfangseinheit T1 jedoch auch in einer unterschiedlichen Höhe angebracht sein wie die zweite Sende-Empfangseinheit T2. Ist der Höhenunterschied bekannt, kann dieser in die Berechnung der Anhängerlänge a2 mit einbezogen werden. Ist der Höhenunterschied nicht bekannt, können sich Ungenauigkeiten in der Bestimmung der Anhängerlänge a2 ergeben. Dabei gilt, je größer der Höhenunterschied, umso größer die Ungenauigkeit. Die Ungenauigkeiten sind jedoch meist verhältnismäßig gering und können vernachlässigt werden.

Ist die Länge a2 des Anhängers 20 bekannt, kann auf ähnliche Art und Weise der Knickwinkel $\alpha$ zwischen Fahrzeug 10 und Anhänger 20 bestimmt werden. Dabei ist es unerheblich, ob die Länge a2 des Anhängers 20 mittels des oben beschriebenen Verfahrens oder auf andere Art und Weise bestimmt wurde. Während einer Kurvenfahrt (vgl. Figur 5) kann auf die oben beschriebene Art und Weise (RSSI-Messung, Laufzeitmessung) durch Aussenden von Signalen zwischen den Sende-Empfangseinheiten T1, T2 der Abstand e zwischen der ersten Sende-Empfangseinheit T1 und der zweiten Sende-Empfangseinheit T2 bestimmt werden. Neben der Länge a2 des Anhängers 20 ist auch der Abstand d zwischen der ersten Sende-Empfangseinheit T1 und dem Drehpunkt P1 bekannt. Der Abstand zwischen der fest am Fahrzeug 10 angeordneten ersten Sende-Empfangseinheit T1 und dem Drehpunkt P1 ist konstant, unabhängig davon, welcher Anhänger 20 mit dem Fahrzeug 10 verbunden ist. Daher kann dieser Wert einmalig im System eingegeben und dort gespeichert werden.

Aus den bekannten Kantenlängen a2, d, e des durch die Sende-Empfangseinheiten T1, T2 und den Drehpunkt P1 gebildeten Dreiecks kann beispielsweise unter Verwendung des Kosinussatzes der Winkel $\gamma$ berechnet werden. Dabei gilt:

$$e^2 = a2^2 + d^2 - (2 \times a2 \times d \times \cos\gamma) \qquad (1)$$

bzw.

$$\cos\gamma = \frac{a2^2 + d^2 - e^2}{2 \times a2 \times d} \qquad (2)$$

Der Winkel $\beta$ zwischen der Verbindungslinie d, die zwischen der ersten Sende-Empfangseinheit T1 und dem Drehpunkt P1 verläuft, und einer Linie x, die durch das Fahrzeug 10 verläuft und dieses in zwei Hälften teilt, ist ebenfalls bekannt. Dieser Winkel $\beta$ bleibt zu jedem Zeitpunkt unverändert und kann somit im System zur späteren Verwendung gespeichert sein.

Aus den Winkeln $\beta$ und $\gamma$ berechnet sich dann der Knickwinkel $\alpha$ zu $\alpha = \beta + \gamma$.

Bei der Berechnung des Knickwinkels $\alpha$ wird wiederum angenommen, dass die erste Sende-Empfangseinheit

6

T1 und die zweite Sende-Empfangseinheit T2 in derselben Höhe angeordnet sind, also z.B. 2 m über dem Boden, 3 m über dem Boden oder 4 m über dem Boden. Sind die Sende-Empfangseinheiten T1, T2 nicht in derselben Höhe angeordnet, kann der entsprechende Höhenunterschied in der Berechnung des Knickwinkels mit berücksichtigt werden. Wird ein möglicherweise vorhandener Höhenunterschied nicht berücksichtigt, ergeben sich dadurch Ungenauigkeiten in der Berechnung des Knickwinkels $\alpha$, wobei die Ungenauigkeiten umso größer sind, je größer der Höhenunterschied ist. Die Ungenauigkeiten sind jedoch meist verhältnismäßig gering und können vernachlässigt werden.

Wie oben bereits erläutert, können Kameraeinheiten bzw. Sende-Empfangseinheiten T2 möglicherweise nicht dauerhaft mit dem Anhänger 20 verbunden sein und nur bei Bedarf angebracht werden. Dabei kann es sein, dass die Kameraeinheit, bzw. Sende-Empfangseinheit T2, an einer unbekannten Position am Anhänger 20 angebracht wird. Die Position einer Sende-Empfangseinheit T2 in Bezug auf ein Fahrzeug 10 mit Anhänger 20 kann beispielsweise anhand einer Feldstärkemessung bestimmt werden. Dabei können am Fahrzeug 10 an bestimmten (bekannten) Positionen zwei oder mehr Sende-Empfangseinheiten T11, T12 angeordnet sein (vgl. Figur 6) . Zwischen den am Fahrzeug 10 angeordneten Sende-Empfangseinheiten T11, T12 und der am Anhänger 20 angeordneten zweiten Sende-Empfangseinheit T2 können Signale gesendet werden. Die Empfangsfeldstärke RSSI dieser Signale kann gemessen werden, und es kann anhand der Empfangsfeldstärke RSSI die Position der zweiten Sende-Empfangseinheit T2 bestimmt werden. Wie oben bereits beschrieben nimmt die Empfangsfeldstärke RSSI eines Signals mit größerer Entfernung zum Sender hin ab.

In Figur 6 sind beispielhaft zwei Sende-Empfangseinheiten T11, T12 im Fahrzeug 10 dargestellt. Im Fahrzeug 10 können jedoch auch mehr Sende-Empfangseinheiten T1n an beliebigen geeigneten Positionen angeordnet sein. Die wenigstens zwei Sende-Empfangseinheiten T11, T12 können mit einem in Figur 6 nicht dargestellten Steuergerät verbunden sein. Das Steuergerät kann dazu ausgebildet sein, Signale über die Sende-Empfangseinheiten T11, T12 auszusenden. Von den Sende-Empfangseinheiten T11, T12 empfangene Signale können wiederum an das Steuergerät zur weiteren Auswertung gesendet werden.

Beispielsweise können von den im Fahrzeug 10 angeordneten Sende-Empfangseinheiten T11, T12 LF-, HF-, UWB, Bluetooth- oder BLE-Signale (Bluetooth Low Energy-Signale), ausgesendet werden. Diese Signale werden von der zweiten Sende-Empfangs-einheit T2 empfangen. Die zweite Sende-Empfangseinheit T2 kann die Empfangsfeldstärke RSSI der empfangenen Signale messen. Da die Position der Sende-Empfangseinheiten T11, T12 im Fahrzeug 10 und die Feldstärke, mit welcher die Signale ausgesendet werden, bekannt sind, kann anhand der zu einem Zeitpunkt bestimmten Empfangsfeldstärke RSSI der entsprechenden Signale die Entfernung zwischen der zweiten Sende-Empfangs-einheit T2 und jeder der ersten Sende-Empfangseinheiten T11, T12 und somit die Position der zweiten Sende-Empfangseinheit T2 relativ zu dem Fahrzeug 10 bestimmt werden.

Signale können dabei wie oben beschrieben von den Sende-Empfangseinheiten T11, T12 im Fahrzeug 10 ausgesendet und von der zweiten Sende-Empfangseinheit T2 empfangen werden. Grundsätzlich ist es jedoch auch möglich, dass die zweite Sende-Empfangseinheit T2 Signale aussendet und jede der ersten Sende-Empfangseinheiten T11, T12 im Fahrzeug 10 die Empfangsfeldstärken RSSI dieser Signale bestimmt. Die zweite Sende-Empfangseinheit T2 kann somit auch als Sender und die ersten Sende-Empfangseinheiten T11, T12 im Fahrzeug 10 als Empfänger dienen. Je weiter die zweite Sende-Empfangseinheit T2 von einer ersten Sende-Empfangseinheit T11, T12 entfernt ist, umso geringer ist wiederum die gemessene Empfangsfeldstärke RSSI der Signale. Aus der gemessenen Empfangsfeldstärke bzw. den gemessenen Empfangsfeldstärken kann dann wiederum die Entfernung der zweiten Sende-Empfangseinheit T2 zu jeder der ersten Sende-Empfangseinheiten T11, T12 bestimmt werden. Wenn die Entfernung zu jeder einzelnen der ersten Sende-Empfangseinheiten T11, T12 bekannt ist, kann grundsätzlich auf die Position der zweiten Sende-Empfangseinheit T2 in Bezug auf das Fahrzeug 10 geschlossen werden. Bei zwei oder mehr Sende-Empfangseinheiten T1n im Fahrzeug 10 kann die Position der zweiten Sende-Empfangseinheit T2 beispielsweise mittels geeigneter Trilaterations- oder Multilaterationsverfahren bestimmt werden.

Dies ist beispielhaft in Figur 6 dargestellt. Ist die Entfernung zwischen der zweiten Sende-Empfangseinheit T2 und einer ersten Sende-Empfangseinheit T11 bekannt, bedeutet dies, dass sich die zweite Sende-Empfangseinheit T2 irgendwo auf einem Kreisbogen k1 um die Sende-Empfangseinheit T11 herum befindet. Der Radius r1 des Kreisbogens k1 entspricht dabei der bestimmten Entfernung zwischen erster Sende-Empfangseinheit T11 und zweiter Sende-Empfangseinheit T2. Das selbe gilt für weitere Sende-Empfangseinheiten T12,.... In Figur 6 sind lediglich zwei erste Sende-Empfangseinheiten T11, T12 und zugehörige Kreisbögen k1, k2 abschnittsweise dargestellt. Der Schnittpunkt der Kreisbögen k1, k2 entspricht der Position der zweiten Sende-Empfangseinheit T2. Bei lediglich zwei Sende-Empfangseinheiten T11, T12 im Fahrzeug 10 ergeben sich grundsätzlich zwei Schnittpunkte, wobei der zweite Schnittpunkt in Figur 6 nicht dargestellt ist. Einer der beiden Schnittpunkte kann beispielsweise anhand bestimmter logischer Kriterien ausgeschlossen werden. Sind im Fahrzeug 10 mehr als zwei Sende-Empfangseinheiten T1n angeordnet, kann die Position der zweiten Sende-Empfangseinheit T2 in der Regel eindeutig bestimmt werden.

Anstatt der Empfangsfeldstärkemessung RSSI kann die Position der zweiten Sende-Empfangseinheit T2 jedoch beispielsweise auch wie bereits oben in Bezug auf die Anhängerlänge a2 beschrieben anhand einer Laufzeitmessung von zwischen den ersten Sende-Empfangseinheiten T11, T12 im Fahrzeug 10 und der zweiten Sende-Empfangseinheit T2 gesendeten Signalen bestimmt werden. Dabei ist es wiederum möglich, sowohl die Laufzeiten der Signale von einer ersten Sende-Empfangseinheit T11, T12 zu der zweiten Sende-Empfangseinheit T2 als auch die Laufzeiten der Signale von der zweiten Sende-Empfangseinheit T2 zur der entsprechenden ersten Sende-Empfangseinheit T11, T12 zu bestimmen ("Round Trip Time of Flight", RTOF). Jedoch kann grundsätzlich auch hier nur die Laufzeit der Signale in einer der beiden Richtungen bestimmt werden ("Time of Arrival", TOA).

Auch bei diesen Verfahren (TOA, RTOF) ergeben sich wiederum Kreisbögen k1, k2 um die entsprechenden ersten Sende-Empfangseinheiten T11, T12 herum, auf welchen die Position der zweiten Sende-Empfangseinheit T2 liegt. Wie oben bereits in Bezug auf das RSSI-Verfahren beschrieben, kann wiederum aus den Schnittpunkten dieser Kreisbögen k1, k2 die Position der zweiten Sende-Empfangseinheit T2 bestimmt werden.

Beispielsweise durch Hindernisse (z.B. Teile des Anhängers) in der Funkstrecke zwischen den Sende-Empfangseinheiten T1, T2 können die gesendeten Signale abgeschwächt werden (Abschattungs-, oder Fading-Effekte). Wie stark ein Signal abgeschwächt wird, hängt dabei beispielsweise von der Trägerfrequenz des Signals ab. Aus diesem Grund kann beispielsweise das Signal auf wenigstens zwei verschiedene Trägerfrequenzen aufmoduliert werden. Da verschiedene Frequenzen unterschiedlich stark von Abschattungseffekten betroffen sind, kann so die Wahrscheinlichkeit erhöht werden, dass das Signal mit wenigstens einer der Trägerfrequenzen vom Empfänger empfangen werden kann. Beispielsweise könnte ein Signal sowohl mit einer Frequenz von 2,4 GHz als auch mit einer Frequenz von 5 GHz übertragen werden. Andere Frequenzen sind dabei jedoch ebenfalls möglich. Das Signal kann dabei mit dem selben Standard auf unterschiedlichen Frequenzen übertragen werden. Es ist jedoch auch möglich, das Signal mittels unterschiedlichen Standards auf unterschiedlichen Frequenzen zu übertragen. Grundsätzlich ist es ebenfalls möglich, zwei verschiedene Signale auf unterschiedlichen Frequenzen zu übertragen, so dass wenigstens eines der Signale vom Empfänger empfangen werden kann.

Figur 6 zeigt die Bestimmung der Position der zweiten Sende-Empfangseinheit T2 beispielhaft im zweidimensionalen Raum. Elektromagnetische Felder breiten sich jedoch grundsätzlich in allen Raumrichtungen aus. Die zweite Sende-Empfangseinheit T2 kann somit im dreidimensionalen Raum überall auf der Oberfläche einer Kugel mit dem bestimmten Radius r1, r2 um die entsprechende Sende-Empfangseinheit T11, T12 herum angeordnet sein. Die anhand der Figur 6 im Zweidimensionalen erläuterten Prinzipien lassen sich jedoch ohne weiteres auf drei Dimensionen übertragen. Je mehr erste Sende-Empfangseinheiten T1n für die Positionsbestimmung verwendet werden, umso größer ist die Genauigkeit der bestimmten Position. Wie oben beschrieben kann bei einer Positionsbestimmung im zweidimensionalen Raum davon ausgegangen werden, dass die Sende-Empfangseinheiten an dem Anhänger auf gleicher Höhe angeordnet sind ohne jedoch die genaue Anbringhöhe der Sende-Empfangseinheiten zu kennen, wodurch sich Ungenauigkeiten ergeben können. Im dreidimensionalen Raum ist eine derartige Annahme (Sende-Empfangseinheiten auf gleicher Höhe) grundsätzlich nicht erforderlich. Für eine eindeutige Positionsbestimmung werden hier jedoch im Allgemeinen wenigstens drei erste Sende-Empfangseinheiten T1n im Fahrzeug benötigt.

In den Figuren 4 bis 6 sind die ersten Sende-Empfangseinheiten T1n im Fahrzeug 10 beispielhaft außen am Fahrzeug 10 angebracht. Dies ist jedoch lediglich ein Beispiel. Die ersten Sende-Empfangseinheiten T1n können grundsätzlich auch im Inneren des Fahrzeugs, beispielsweise in einer Steuereinheit, angeordnet sein. Die beispielhaft dargestellten geometrischen Grundsätze zur Bestimmung der gewünschten Größen sind dabei jedoch auf ähnliche Weise anwendbar.

Die gewünschten Fahrzeugparameter (Anhängerlänge, Knickwinkel, etc.) können dabei lediglich einmal in einer bestimmten Fahrsituation bestimmt werden. Es ist jedoch auch möglich, die oben beschriebenen Messungen wiederholt auszuführen. Die so bestimmten Anhängerparameter können dann über mehrere aufeinanderfolgende Messungen gemittelt werden, um dadurch die Ergebnisse zu verfeinern. Dabei können offensichtlich als Fehlmessungen erkannte Messungen beispielsweise unberücksichtigt bleiben. Bei der Bestimmung der Anhängerlänge a2 können beispielsweise solche Messungen unberücksichtigt bleiben, welche während Kurvenfahrten durchgeführt wurden. Beispielsweise können auch Filter angewendet werden (z.B. Kalman-Filter).

Die Bestimmung des Knickwinkels $\alpha$ kann beispielsweise auch unter Zuhilfenahme weiterer Informationen oder Parameter weiter verfeinert werden, wie z.B. zeitliche Mitverfolgung der Lenkradposition, Anhängerkantenerkennung anhand von Bildinformationen, etc.

In den Figuren 4 und 5 ist jeweils nur eine erste Sende-Empfangseinheit T1 dargestellt. Die jeweiligen Parameter (Anhängerlänge, Knickwinkel, etc.) können jedoch beispielsweise auch mittels mehr als einer im Fahrzeug 10 angeordneten Sende-Empfangseinheit T1 bestimmt werden. Auch dadurch können Messungen verfeinert und verifiziert werden.

Auch durch das Verwenden von zwei (oder mehr) Sende-Empfangseinheiten am Anhänger 20 können Messungen verfeinert und verifiziert werden. Beispielsweise ist es möglich, zwei Kamerasysteme, bzw. zwei Sende-Empfangseinheiten am Anhänger 20 vorzusehen, wovon eine Sende-Empfangseinheit an der rechten und die andere Sende-Empfangseinheit an der linken Seite des Anhängers 20 angebracht ist. In einem solchen Fall kann der Abstand zwischen diesen zwei an dem Anhänger 20 angeordneten Sende-Empfangseinheiten behelfsmäßig mit der maximal zulässigen Fahrzeugbreite f angenommen werden, wenn der tatsächliche Abstand zwischen den Sende-Empfangseinheiten nicht bekannt ist.

Die so bestimmten Parameter können anschließend beispielsweise von verschiedensten Fahrerassistenzsystemen verwendet werden. Beispielsweise können Kameraeinheiten gezielt den Bereich um die Anhängerhinterkante aufnehmen, wenn Anhängerlänge a2 und Knickwinkel α bekannt sind. So können dem Fahrer gezielt diese Bereiche auf Displays eines Außenspiegelersatzsystems angezeigt werden. Dies kann beispielsweise bei Einparkvorgängen von besonderem Interesse sein. Während der Fahrt können dem Fahrer beispielsweise unterschiedliche Bereiche auf Displays dargestellt werden (z.B. toter Winkel). Bei Überholvorgängen können noch andere Bereiche von Interesse für den Fahrer sein und diesem entsprechend angezeigt werden.

Ist die Position von (temporär) am Anhänger 20 angebrachten Kameraeinheiten bekannt, können beispielsweise gezielt Hilfslinien in den Bildausschnitten angezeigt werden, welche die Breite des Anhängers 20 darstellen, um beispielsweise beim Rückwärtsfahren keine Hindernisse anzufahren. Zudem ermöglicht es die Kenntnis der verschiedenen Parameter auch, noch weitere Rangierhilfsinformationen darzustellen.

Bei so genannten Surround View Systemen kann die Kenntnis der genauen Position der Kameraeinheit beispielsweise die Kalibrierung des Systems vereinfachen. Die Kenntnis über die Fahrzeuggeometrie und die Anhängergeometrie kann beispielsweise auch von automatisierten Einparksystemen verwendet werden, bei welcher das Fahrzeug 10 selbstständig ohne das Eingreifen eines Fahrers einparkt. Hierzu können jedoch möglicherweise noch weitere Parameter erforderlich sein. Weiterhin ermöglicht die Kenntnis über die verschiedenen Parameter auch das automatische Be- und Entladen von Anhängern 20 und das korrekte Positionieren von Drohnen in Bezug auf den Anhänger 20 bzw. auf das Fahrzeug 10. Anhand des bestimmten Knickwinkels α kann beispielsweise auch eine empfohlene Geschwindigkeit für das Fahrzeug 10 mit dem entsprechenden Anhänger 20 bestimmt werden.

Die Grundsätze der Erfindung sind oben anhand eines Lastkraftwagens mit Anhänger beschrieben. Grundsätzlich können diese Prinzipien jedoch auch bei jeglichen anderen Fahrzeugen mit Anhänger Anwendung finden, wie beispielsweise bei PKWs, landwirtschaftlichen oder industriellen Fahrzeugen. Auch bei Fahrzeugen zum Bewegen von Flugzeugen oder anderen Fahrzeugen zur Verwendung auf Rollfeldern können die Grundsätze Anwendung finden. Die beschriebenen Sende-Empfangseinheiten können in Kameraeinheiten integriert sein, mit Kameraeinheiten verbunden sein oder unabhängig von Kameraeinheiten am Fahrzeug 10 und/oder am Anhänger 20 angeordnet sein.

Gemäß einem Beispiel ist ein Kamerasystem für ein Surround View System temporär mittels eines Saugnapfes an der Hinterseite eines Anhängers angebracht. Das Kamerasystem sendet Bildinformationen mittels WLAN an ein Steuergerät im Zugfahrzeug. Bei bereits vorhandenen Systemen kann beispielsweise die Funktionalität zur Bestimmung der Anhängerparameter mittels eines Softwareupdates in bereits vorhandenen Steuergeräten nachgerüstet werden. Der Abstand zwischen dem Kamerasystem am Anhänger und dem Steuergerät im Fahrzeug kann beispielsweise regelmäßig in einem zeitlichen Abstand von 100 ms bestimmt werden. Der bestimmte Abstand kann über einen Fahrzeugbus (z.B. CAN-Bus) an ein oder mehrere Displays eines Fahrerassistenzsystems gesendet werden. Das Fahrerassistenzsystem kann beispielsweise ein Außenspiegelersatzsystem sein, welches seitlich am Fahrzeug (z.B. an der A-Säule) angeordnete Displays aufweist. Die Displays können wiederum Steuergeräte aufweisen, welche den bestimmten Abstand über den Fahrzeugbus empfangen und daraus die Anhängerlänge und den Knickwinkel berechnen. Die Geometrie des Fahrzeugs kann in den Steuergeräten bekannt sein. Weiterhin kann dabei angenommen werden, dass das Kamerasystem hinten am Anhänger mittig in einer Höhe von 4 m angebracht ist. Aus allen bekannten Parametern kann dann beispielsweise die Position der senkrechten seitlichen Hinterkanten des Anhängers bestimmt und der entsprechende Bereich auf den Displays entsprechend angezeigt werden.

Der Bildausschnitt der dargestellten Bilder kann dabei entsprechend der aktuellen Fahrsituation gewählt werden. Beispielsweise kann bei abgeknicktem Anhänger in Kurvenfahrten nur ein kleiner Teil des Anhängers bzw. der seitlichen Anhängerplane dargestellt werden. Der Großteil des Displays kann dazu verwendet werden, den für den Fahrer interessanteren Teil der Umwelt seitlich der Anhängerhinterkante darzustellen. Dies kann Rangierfahrten für den Fahrer wesentlich erleichtern, insbesondere bei Rückwärtsfahrten. Ungenauigkeiten bei der Bestimmung des Abstands zwischen dem Kamerasystem und dem Steuergerät sowie die möglicherweise nicht exakte Annahme in Bezug auf die Anbringposition des Kamerasystems am Anhänger sind dabei akzeptabel, da diese Ungenauigkeiten nur einen geringen Einfluss auf den tatsächlich angezeigten Bildausschnitt haben.

Gemäß einem weiteren Beispiel ist am Anhänger eines landwirtschaftlichen Nutzfahrzeuges eine Rückfahrkamera mittels eines Magneten temporär befestigt. Die Anbringposition ist dabei in diesem Beispiel aufgrund der Bauweise des Anhängers nicht mittig. Die Rückfahrkamera sendet ihre Bilddaten über eine Funkverbindung an zwei Empfänger, welche in den Außenspiegeln des Zugfahrzeuges angebracht sind. Sowohl im Sender (Rückfahrkamera) als auch in den Empfängern ist eine kostengünstige Hardware zur Bestimmung von Abständen mittels RTOF verbaut. Während einer längeren Geradeausfahrt, welche mittels Lenkwinkelmitverfolgung oder, falls diese nicht verfügbar ist, über die Erkennung des optischen Flusses im Kamerabild oder mittels Beschleunigungssensoren erkannt werden kann, wird mit Hilfe von Trilateration die horizontale Anbringposition der Rückfahrkamera an der Rückwand des Anhängers bestimmt. Hierbei wird eine Anbringhöhe von 2 m über dem Boden angenommen. Da in dem vorliegenden Beispiel nur zwei Empfänger zur Verfügung stehen, kann die tatsächliche Anbringhöhe nicht bestimmt werden und muss daher mit einem vorgegebenen Wert angenommen werden. Zur genauen Bestimmung der Anbringhöhe sind generell zwei oder mehr Empfänger erforderlich.

Alternativ dazu kann die Anbringhöhe der Kamera anhand des Neigungswinkels der Kamera (z.B. Bestimmung mittels eines Gyro-Sensors), den intrinsischen Kameraparametern, der Fahrzeuggeschwindigkeit und/oder dem optischen Fluss bestimmt werden. Da sich das Fahrzeug in Geradeausfahrt befindet, kann der Knickwinkel mit 180° angenommen werden. Führt der Fahrer später eine Rückwärtsfahrt aus, beispielsweise zum Rangieren oder Einparken, kann die Information über die horizontale Position der Kamera dazu genutzt werden, um im Rückfahrkamerabild zwei (inverse) Schleppkurven für die linke und rechte Anhängerhinterkante einzublenden, welche dem Fahrer anzeigen, welcher Bereich bzw. welche Objekte der Umgebung von dem rückwärtsfahrenden Anhänger bei gegebenem Einschlagwinkel erfasst werden. Eine (geringfügige) Ungenauigkeit bei der Bestimmung des Abstands zwischen Rückfahrkamera und Empfängern mittels RTOF sowie durch die möglicherweise nicht exakte Annahme in Bezug auf die Anbringhöhe der Kamera kann aus Sicherheitsgründen entsprechend den Schleppkurven aufgeschlagen werden. Dadurch können die Schleppkurven beispielsweise im Kamerabild geringfügig nach außen verschoben werden.

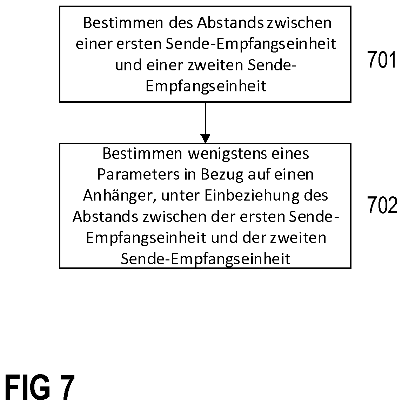

Figur 7 zeigt in einem Ablaufdiagramm ein Verfahren zum Bestimmen von Fahrzeugparametern. Das Verfahren weist das Bestimmen des Abstands zwischen einer ersten Sende-Empfangseinheit und einer zweiten Sende-Empfangseinheit auf (Schritt 701), wobei die erste Sende-Empfangseinheit an einem Fahrzeug und die zweite Sende-Empfangseinheit an einem mit dem Fahrzeug verbundenen Anhänger angebracht ist. Das Verfahren weist weiterhin das Bestimmen wenigstens eines Parameters in Bezug auf den Anhänger, unter Einbeziehung des Abstands zwischen der ersten Sende-Empfangseinheit und der zweiten Sende-Empfangseinheit auf (Schritt 702).

**Patentansprüche**

1.  Verfahren, das aufweist:

    Bestimmen des Abstands (c, e, r1) zwischen einer ersten Sende-Empfangseinheit (T1, T11) und einer zweiten Sende-Empfangseinheit (T2), wobei die erste Sende-Empfangseinheit (T1, T11) an einem Fahrzeug (10) und die zweite Sende-Empfangseinheit (T2) an einem mit dem Fahrzeug (10) verbundenen Anhänger (20) angebracht ist; und
    Bestimmen wenigstens eines Parameters in Bezug auf den Anhänger (20), unter Einbeziehung des Abstands (c, e, r1) zwischen der ersten Sende-Empfangseinheit (T1, T11) und der zweiten Sende-Empfangseinheit (T2), **dadurch gekennzeichnet, dass** die erste Sende-Empfangseinheit (T1) in eine Kameraeinheit integriert ist und seitlich an dem Fahrzeug (10) angeordnet ist, die zweite Sende-Empfangseinheit (T2) in ein Funkkamerasystem integriert ist und an der Hinterkante des Anhängers (20) in einem Abstand (b) zur seitlichen Kante des Anhängers (20) angeordnet ist, und das Bestimmen des wenigstens einen Parameters in Bezug auf den Anhänger (20) aufweist:
    Bestimmen der Länge (a2) des Anhängers (20) anhand des bestimmten Abstands (c), der Entfernung (a1) zwischen der ersten Sende-Empfangseinheit (T1) und einer Vorderkante des Anhängers (20), und einem horizontalen Versatz (b) zwischen der zweiten Sende-Empfangseinheit (T2) und der ersten Sende-Empfangseinheit (T1).

2.  Verfahren nach Anspruch 1, wobei das Bestimmen des Abstands (c, e, r1) zwischen der ersten Sende-Empfangseinheit (T1, T11) und der zweiten Sende-Empfangseinheit (T2) das Aussenden wenigstens eines Signals zwischen der ersten Sende-Empfangseinheit (T1, T11) und der zweiten Sende-Empfangseinheit (T2) aufweist.

3.  Verfahren nach Anspruch 2, wobei das Bestimmen des Abstands (c, e, r1) zwischen der ersten Sende-Empfangseinheit (T1, T11) und der zweiten Sende-Empfangseinheit (T2) aufweist:
    Bestimmen der Empfangsfeldstärke des zwischen der ersten Sende-Empfangseinheit (T1, T11) und der zweiten Sende-Empfangseinheit (T2) gesendeten Signals.

4.  Verfahren nach Anspruch 2 oder 3, wobei das Bestimmen des Abstands (c, e, r1) zwischen der ersten Sende-Empfangseinheit (T1, T11) und der zweiten Sende-Empfangseinheit (T2) aufweist:
    Bestimmen der Laufzeit des zwischen der ersten Sende-Empfangseinheit (T1, T11) und der zweiten Sende-Empfangseinheit (T2) gesendeten Signals.

5.  Verfahren nach einem der Ansprüche 2 bis 4, wobei das Aussenden des wenigstens einen Signals zwischen der ersten Sende-Empfangseinheit (T1, T11) und der zweiten Sende-Empfangseinheit (T2) das Aufmodulieren des wenigstens einen Signals auf wenigstens zwei verschiedene Trägerfrequenzen aufweist.

6.  Verfahren nach einem der Ansprüche 2 bis 4, wobei das Aussenden des wenigstens einen Signals zwischen der ersten Sende-Empfangseinheit (T1, T11) und der zweiten Sende-Empfangseinheit (T2) aufweist, dass wenigstens zwei Signale mit jeweils unterschiedlicher Trägerfrequenz ausgesendet werden.

7. Verfahren nach einem der Ansprüche 1 bis 6, wobei das Bestimmen des wenigstens einen Parameters in Bezug auf den Anhänger (20) aufweist:Bestimmen der Länge (a2) des Anhängers (20) zusätzlich anhand eines vertikalen Versatzes zwischen der zweiten Sende-Empfangseinheit (T2) und der ersten Sende-Empfangseinheit (T1).

8. Verfahren nach einem der vorhergehenden Ansprüche, wobei das Bestimmen des wenigstens einen Parameters in Bezug auf den Anhänger (20) aufweist:
Bestimmen eines Knickwinkels ($\alpha$) zwischen dem Fahrzeug (10) und dem Anhänger (20) anhand des bestimmten Abstands (e), dem Abstand (d) zwischen der ersten Sende-Empfangseinheit (T1) und einem Drehpunkt (P1) des Anhängers (20), und der Länge (a2) des Anhängers (20).

9. Verfahren nach einem der vorhergehenden Ansprüche, wobei das Bestimmen des wenigstens einen Parameters in Bezug auf den Anhänger (20) weiterhin aufweist:
Bestimmen des Abstands (r2) zwischen einer weiteren Sende-Empfangseinheit (T12) und der zweiten Sende-Empfangseinheit (T2), wobei die weitere Sende-Empfangseinheit (T12) an dem Fahrzeug (10) an einer unterschiedlichen Position wie die erste Sende-Empfangseinheit (T11) angebracht ist.

10. Verfahren nach Anspruch 9, wobei das Bestimmen des wenigstens einen Parameters in Bezug auf den Anhänger (20) weiterhin aufweist:
Bestimmen der Position der zweiten Sende-Empfangseinheit (T2) mittels Trilaterations- oder Multilaterationsverfahren unter Berücksichtigung der Entfernungen (r1, r2) zwischen den Sende-Empfangseinheiten (T11, T12) am Fahrzeug (10) und der zweiten Sende-Empfangseinheit (T2) am Anhänger (20).

11. Verfahren nach einem der vorhergehenden Ansprüche, das weiterhin aufweist:
Verwenden des wenigstens einen bestimmten Parameters zur Steuerung eines Fahrerassistenzsystems.

12. Vorrichtung mit:

einer ersten Sende-Empfangseinheit (T1, T11), die dazu ausgebildet ist, an einem Fahrzeug (10) angebracht zu werden; und
einer zweiten Sende-Empfangseinheit (T2), die dazu ausgebildet ist, an einem mit dem Fahrzeug (10) verbundenen Anhänger (20) angebracht zu werden; wobei
die Vorrichtung dazu ausgebildet ist, einen Abstand (c, e, r1) zwischen der ersten Sende-Empfangseinheit (T1, T11) und der zweiten Sende-Empfangseinheit (T2) zu bestimmen, wenn die erste Sende-Empfangseinheit (T1, T11) an dem Fahrzeug (10) und die zweite Sende-Empfangseinheit (T2) an dem Anhänger (20) angebracht sind, und
die Vorrichtung weiterhin dazu ausgebildet ist, wenigstens einen Parameter in Bezug auf den Anhänger (20) zu bestimmen, unter Einbeziehung des Abstands (c, e, r1) zwischen der ersten Sende-Empfangseinheit (T1, T11) und der zweiten Sende-Empfangseinheit (T2), **dadurch gekennzeichnet, dass** die erste Sende-Empfangseinheit (T1) in eine Kameraeinheit integriert ist und seitlich an dem Fahrzeug (10) angeordnet ist, die zweite Sende-Empfangseinheit (T2) in ein Funkkamerasystem integriert ist und an der Hinterkante des Anhängers (20) in einem Abstand (b) zur seitlichen Kante des Anhängers (20) angeordnet ist, und das Bestimmen des wenigstens einen Parameters in Bezug auf den Anhänger (20) aufweist:
Bestimmen der Länge (a2) des Anhängers (20) anhand des bestimmten Abstands (c), der Entfernung (a1) zwischen der ersten Sende-Empfangseinheit (T1) und einer Vorderkante des Anhängers (20), und einem horizontalen Versatz (b) zwischen der zweiten Sende-Empfangseinheit (T2) und der ersten Sende-Empfangseinheit (T1).

13. Vorrichtung nach Anspruch 12, wobei die Vorrichtung weiterhin dazu ausgebildet ist, wenigstens ein Signal zwischen der ersten Sende-Empfangseinheit (T1, T11) und der zweiten Sende-Empfangseinheit (T2) auszusenden, wenn die erste Sende-Empfangseinheit (T1, T11) an dem Fahrzeug (10) und die zweite Sende-Empfangseinheit (T2) an dem Anhänger (20) angebracht sind.

14. Vorrichtung nach Anspruch 13, die weiterhin dazu ausgebildet ist, die Empfangsfeldstärke des zwischen der ersten Sende-Empfangseinheit (T1, T11) und der zweiten Sende- Empfangseinheit (T2) gesendeten Signals zu bestimmen.

**15.** Vorrichtung nach Anspruch 13 oder 14, die weiterhin dazu ausgebildet ist, die Laufzeit des zwischen der ersten Sende-Empfangseinheit (T1, T11) und der zweiten Sende-Empfangseinheit (T2) gesendeten Signals zu bestimmen.

**Claims**

**1.** Method which comprises:

determining the distance (c, e, r1) between a first transceiver unit (T1, T11) and a second transceiver unit (T2), wherein the first transceiver unit (T1, T11) is mounted on a vehicle (10) and the second transceiver unit (T2) is mounted on a trailer (20) which is connected to the vehicle (10); and
determining at least one parameter relating to the trailer (20), taking into account the distance (c, e, r1) between the first transceiver unit (T1, T11) and
the second transceiver unit (T2), **characterized in that** the first transceiver unit (T1) is integrated into a camera unit and is arranged laterally on the vehicle (10), the second transceiver unit (T2) is integrated into a radio camera system and is arranged on the rear edge of the trailer (20) at a distance (b) from the lateral edge of the trailer (20), and determining the at least one parameter relating to the trailer (20) comprises:
determining the length (a2) of the trailer (20) on the basis of the determined distance (c), the distance (a1) between the first transceiver unit (T1) and a front edge of the trailer (20), and a horizontal offset (b) between the second transceiver unit (T2) and the first transceiver unit (T1).

**2.** Method according to Claim 1, wherein determining the distance (c, e, r1) between the first transceiver unit (T1, T11) and the second transceiver unit (T2) comprises transmitting at least one signal between the first transceiver unit (T1, T11) and the second transceiver unit (T2).

**3.** Method according to Claim 2, wherein determining the distance (c, e, r1) between the first transceiver unit (T1, T11) and the second transceiver unit (T2) comprises:
determining the received field strength of the signal sent between the first transceiver unit (T1, T11) and the second transceiver unit (T2).

**4.** Method according to Claim 2 or 3, wherein determining the distance (c, e, r1) between the first transceiver unit (T1, T11) and the second transceiver unit (T2) comprises:
determining the transit time of the signal sent between the first transceiver unit (T1, T11) and the second transceiver unit (T2).

**5.** Method according to any of Claims 2 to 4, wherein transmitting the at least one signal between the first transceiver unit (T1, T11) and the second transceiver unit (T2) comprises modulating the at least one signal onto at least two different carrier frequencies.

**6.** Method according to any of Claims 2 to 4, wherein transmitting the at least one signal between the first transceiver unit (T1, T11) and the second transceiver unit (T2) comprises the fact that at least two signals each with a different carrier frequency are transmitted.

**7.** Method according to any of Claims 1 to 6, wherein determining the at least one parameter relating to the trailer (20) comprises:
determining the length (a2) of the trailer (20) additionally on the basis of a vertical offset between the second transceiver unit (T2) and the first transceiver unit (T1).

**8.** Method according to any of the preceding claims, wherein determining the at least one parameter relating to the trailer (20) comprises:
determining an articulation angle ($\alpha$) between the vehicle (10) and the trailer (20) on the basis of the determined distance (e), the distance (d) between the first transceiver unit (T1) and a pivot point (P1) of the trailer (20), and the length (a2) of the trailer (20).

**9.** Method according to any of the preceding claims, wherein determining the at least one parameter relating to the trailer (20) also comprises:
determining the distance (r2) between a further transceiver unit (T12) and the second transceiver unit (T2), wherein the further transceiver unit (T12) is mounted on the vehicle (10) at a different position than the first transceiver unit (T11).

10. Method according to Claim 9, wherein determining the at least one parameter relating to the trailer (20) also comprises: determining the position of the second transceiver unit (T2) using trilateration or multilateration methods, taking into account the distances (r1, r2) between the transceiver units (T11, T12) on the vehicle (10) and the second transceiver unit (T2) on the trailer (20).

11. Method according to any of the preceding claims, which method also comprises: using the at least one determined parameter to control a driver assistance system.

12. Device having:

a first transceiver unit (T1, T11) which is designed to be mounted on a vehicle (10); and
a second transceiver unit (T2) which is designed to be mounted on a trailer (20) connected to the vehicle (10); wherein
the device is designed to determine a distance (c, e, r1) between the first transceiver unit (T1, T11) and the second transceiver unit (T2) when the first transceiver unit (T1, T11) is mounted on the vehicle (10) and the second transceiver unit (T2) is mounted on the trailer (20), and
the device is also designed to determine at least one parameter relating to the trailer (20), taking into account the distance (c, e, r1) between the first transceiver unit (T1, T11) and the second transceiver unit (T2), **characterized in that** the first transceiver unit (T1) is integrated into a camera unit and is arranged laterally on the vehicle (10), the second transceiver unit (T2) is integrated into a radio camera system and is arranged on the rear edge of the trailer (20) at a distance (b) from the lateral edge of the trailer (20), and determining the at least one parameter relating to the trailer (20) comprises:
determining the length (a2) of the trailer (20) on the basis of the determined distance (c), the distance (a1) between the first transceiver unit (T1) and a front edge of the trailer (20), and a horizontal offset (b) between the second transceiver unit (T2) and the first transceiver unit (T1).

13. Device according to Claim 12, wherein the device is also designed to transmit at least one signal between the first transceiver unit (T1, T11) and the second transceiver unit (T2) when the first transceiver unit (T1, T11) is mounted on the vehicle (10) and the second transceiver unit (T2) is mounted on the trailer (20).

14. Device according to Claim 13, which is also designed to determine the received field strength of the signal sent between the first transceiver unit (T1, T11) and the second transceiver unit (T2).

15. Device according to Claim 13 or 14, which is also designed to determine the transit time of the signal sent between the first transceiver unit (T1, T11) and the second transceiver unit (T2).

**Revendications**

1. Procédé qui comprend :

détermination de l'écart (c, e, r1) entre une première unité d'émission-réception (T1, T11) et une deuxième unité d'émission-réception (T2), la première unité d'émission-réception (T1, T11) étant montée sur un véhicule (10) et la deuxième unité d'émission-réception (T2) sur une remorque (20) reliée au véhicule (20) ; et
détermination d'au moins un paramètre en référence à la remorque (20) en impliquant l'écart (c, e, r1) entre la première unité d'émission-réception (T1, T11) et la deuxième unité d'émission-réception (T2), **caractérisé en ce que** la première unité d'émission-réception (T1) est intégrée dans une unité à caméra et est disposée latéralement sur le véhicule (10), la deuxième unité d'émission-réception (T2) est intégrée dans un système de caméra radio et est disposée au niveau du bord arrière de la remorque (20) à un écart (b) par rapport au bord latéral de la remorque (20), et la détermination de l'au moins un paramètre en référence à la remorque (20) comprend :

détermination de la longueur (a2) de la remorque (20) à l'aide de l'écart (c) déterminé, de la distance (a1) entre la première unité d'émission-réception (T1) et
un bord avant de la remorque (20) et un décalage horizontal (b) entre la deuxième unité d'émission-réception (T2) et la première unité d'émission-réception (T1).

2. Procédé selon la revendication 1, la détermination de l'écart (c, e, r1) entre la première unité d'émission-réception (T1, T11) et la deuxième unité d'émission-réception (T2) comprenant l'émission d'au moins un signal entre la première unité d'émission-réception (T1, T11) et la deuxième unité d'émission-réception (T2).

3. Procédé selon la revendication 2, la détermination de l'écart (c, e, r1) entre la première unité d'émission-réception (T1, T11) et la deuxième unité d'émission-réception (T2) comprenant :
détermination de l'intensité du champ de réception du signal émis entre la première unité d'émission-réception (T1, T11) et la deuxième unité d'émission-réception (T2).

4. Procédé selon la revendication 2 ou 3, la détermination de l'écart (c, e, r1) entre la première unité d'émission-réception (T1, T11) et la deuxième unité d'émission-réception (T2) comprenant :
détermination du temps de propagation du signal émis entre la première unité d'émission-réception (T1, T11) et la deuxième unité d'émission-réception (T2).

5. Procédé selon l'une des revendications 2 à 4, l'émission de l'au moins un signal entre la première unité d'émission-réception (T1, T11) et la deuxième unité d'émission-réception (T2) comprenant la modulation de l'au moins un signal sur au moins deux fréquences porteuses différentes.

6. Procédé selon l'une des revendications 2 à 4, l'émission de l'au moins un signal entre la première unité d'émission-réception (T1, T11) et la deuxième unité d'émission-réception (T2) comprenant qu'au moins deux signaux ayant des fréquences porteuses respectivement différentes sont émis.

7. Procédé selon l'une des revendications 1 à 6, la détermination de l'au moins un paramètre en référence à la remorque (20) comprenant : détermination de la longueur (a2) de la remorque (20) en plus à l'aide d'un décalage vertical entre la deuxième unité d'émission-réception (T2) et la première unité d'émission-réception (T1).

8. Procédé selon l'une des revendications précédentes, la détermination de l'au moins un paramètre en référence à la remorque (20) comprenant :
détermination d'un angle d'articulation ($\alpha$) entre le véhicule (10) et la remorque (20) à l'aide de l'écart (e) déterminé, de l'écart (d) entre la première unité d'émission-réception (T1) et un point de rotation (P1) de la remorque (20), et la longueur (a2) de la remorque (20).

9. Procédé selon l'une des revendications précédentes, la détermination de l'au moins un paramètre en référence à la remorque (20) comprenant en outre :
détermination de l'écart (r2) entre une unité d'émission-réception supplémentaire (T12) et la deuxième unité d'émission-réception (T2), l'unité d'émission-réception supplémentaire (T12) étant montée sur le véhicule (10) à une position différente de la première unité d'émission-réception (T11).

10. Procédé selon la revendication 9, la détermination de l'au moins un paramètre en référence à la remorque (20) comprenant en outre :
détermination de la position de la deuxième unité d'émission-réception (T2) au moyen d'un procédé de trilatération ou de multilatération en tenant compte des distances (r1, r2) entre les unités d'émission-réception (T11, T12) sur le véhicule (10) et la deuxième unité d'émission-réception (T2) sur la remorque (20).

11. Procédé selon l'une des revendications précédentes, comprenant en outre :
utilisation de l'au moins un paramètre déterminé pour commander un système d'assistance au conducteur.

12. Dispositif comprenant :

une première unité d'émission-réception (T1, T11) qui est configurée pour être montée sur un véhicule (10) ; et
une deuxième unité d'émission-réception (T2) qui est configurée pour être montée sur une remorque (20) reliée au véhicule (10) ;
le dispositif étant configuré pour déterminer un écart (c, e, r1) entre la première unité d'émission-réception (T1, T11) et la deuxième unité d'émission-réception (T2), lorsque la première unité d'émission-réception (T1, T11) est montée sur la véhicule (10) et la deuxième unité d'émission-réception (T2) sur la remorque (20), et
le dispositif étant en outre configuré pour déterminer au moins un paramètre en référence à la remorque (20) en impliquant l'écart (c, e, r1) entre la première unité d'émission-réception (T1, T11) et la deuxième unité d'émission-réception (T2), **caractérisé en ce que** la première unité d'émission-réception (T1) est intégrée dans une unité à caméra et est disposée latéralement sur le véhicule (10), la deuxième unité d'émission-réception (T2) est intégrée dans un système de caméra radio et est disposée au niveau du bord arrière de la remorque (20) à un écart (b) par rapport au bord latéral de la remorque (20), et la détermination de l'au moins un paramètre en référence à la remorque (20) comprend :

détermination de la longueur (a2) de la remorque (20) à l'aide de l'écart (c) déterminé, de la distance (a1) entre la première unité d'émission-réception (T1) et un bord avant de la remorque (20) et un décalage horizontal (b) entre la deuxième unité d'émission-réception (T2) et la première unité d'émission-réception (T1).

13. Dispositif selon la revendication 12, le dispositif étant en outre configuré pour émettre au moins un signal entre la première unité d'émission-réception (T1, T11) et la deuxième unité d'émission-réception (T2) lorsque la première unité d'émission-réception (T1, T11) est montée sur le véhicule (10) et la deuxième unité d'émission-réception (T2) sur la remorque (20).

14. Dispositif selon la revendication 13, lequel est en outre configuré pour déterminer l'intensité du champ de réception du signal émis entre la première unité d'émission-réception (T1, T11) et la deuxième unité d'émission-réception (T2).

15. Dispositif selon la revendication 13 ou 14, lequel est en outre configuré pour déterminer le temps de propagation du signal émis entre la première unité d'émission-réception (T1, T11) et la deuxième unité d'émission-réception (T2).

**FIG 1**

**FIG 2**

**FIG 3**

**FIG 4**

**FIG 5**

**FIG 6**

Bestimmen des Abstands zwischen
einer ersten Sende-Empfangseinheit
und einer zweiten Sende-
Empfangseinheit

701

Bestimmen wenigstens eines
Parameters in Bezug auf einen
Anhänger, unter Einbeziehung des
Abstands zwischen der ersten Sende-
Empfangseinheit und der zweiten
Sende-Empfangseinheit

702

# FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014204924 A1
- DE 102014212821 A1
- US 2013307723 A1
- US 2018059209 A1
- US 2018097572 A1